(19) Europäisches Patentamt
European Patent Office
Office européen des brevets

(11) **EP 3 882 781 A1**

(12) **EUROPEAN PATENT APPLICATION**
published in accordance with Art. 153(4) EPC

(43) Date of publication:
**22.09.2021 Bulletin 2021/38**

(21) Application number: **18940389.2**

(22) Date of filing: **16.11.2018**

(51) Int Cl.:
**G06F 16/00** (2019.01)

(86) International application number:
**PCT/JP2018/042484**

(87) International publication number:
**WO 2020/100289 (22.05.2020 Gazette 2020/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **FUJITSU LIMITED**
**Kanagawa 211-8588 (JP)**

(72) Inventor: **UCHIDA, Hidetsugu**
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **SIMILARITY CALCULATION DEVICE, SIMILARITY CALCULATION METHOD, AND SIMILARITY CALCULATION PROGRAM**

(57)    A similarity calculation device (200) refers to a storage unit that stores each binarized first code corresponding to a plurality of first media data. The similarity calculation device (200) calculates each similarity between a second media data and each of the first media data based on a probability that a second code obtained by binarizing a feature vector corresponding to the second media data is converted into the first code.

## FIG. 1

**Description**

TECHNICAL FIELD

The present invention relates to a similarity calculation device and the like.

BACKGROUND ART

There is a search system that searches a database for media similar to a query. In this search system, a feature vector of the media existing in the vicinity of a feature vector of the query is searched by calculating a distance between the feature vector of the query and the feature vector of each media stored in the database. The distance calculation corresponds to the similarity calculation such as the cosine distance calculation.

Here, the feature vector used in the search system is a high-dimensional feature vector. Therefore, when each distance between the feature vector of the query and the feature vector of each media is calculated, the calculation cost becomes enormous. When the calculation cost increases, it takes time from inputting the query to outputting the search result.

In order to reduce the calculation cost using the feature vector, there is a conventional technology that approximates the feature vector to a binary code. This conventional technology calculates the Hamming distance between approximated binary codes as the similarity. Since the binary code is more compact than the feature vector, it is possible to reduce the calculation cost and shorten the search time.

CITATION LIST

PATENT DOCUMENT

Patent Document 1: Japanese Laid-open Patent Publication No. 2017-54438
Patent Document 2: Japanese Laid-open Patent Publication No. 2018-55618
Patent Document 3: Japanese Laid-open Patent Publication No. 2013-246739
Patent Document 4: International Publication Pamphlet No. WO 2009/151002
Patent Document 5: U.S. Patent No. 2011/0093419 NON-PATENT DOCUMENT

Non-Patent Document 1: Y. Gong and S Lazebnik, "Iterative Quantization: A Procrustean Approach to Leaning Binary Codes." In Proc. CVPR, 2011.

SUMMARY OF INVENTION

TECHNICAL PROBLEM

However, the above-mentioned conventional technology has a problem that it is not possible to calculate the similarity accurately with a small calculation load.

In the conventional technology, the feature vector is approximated to the binary code, but since the Hamming distance between the binary codes has a discretized value, it is difficult to express a precise distance. For example, even if the feature vectors themselves each have different values, each Hamming distance may be the same as a result of calculating the Hamming distance by approximating it to the binary code. Then, it means that each similarity is matched, ranking cannot be performed, and the calculation accuracy of similarity is lowered.

Furthermore, if the similarity is calculated by using the feature vector as is without approximating it to the binary code, the calculation load increases even though the accuracy of the similarity calculation improves.

In one aspect, it is an object of the present invention to provide a similarity calculation device, a similarity calculation method, and a similarity calculation program capable of accurately performing similarity calculation with a small calculation load.

SOLUTION TO PROBLEM

In the first plan, the similarity calculation device includes a storage unit and a calculation unit. The storage unit stores each binarized first code corresponding to a plurality of first media data. The calculation unit calculates each similarity between the second media data and each of the first media data based on the probability that the second code obtained by binarizing the feature vector corresponding to the second media data is converted into the first code.

ADVANTAGEOUS EFFECTS OF INVENTION

It is possible to calculate the similarity accurately with a small calculation load.

BRIEF DESCRIPTION OF DRAWINGS

FIG. 1 is a diagram for explaining processing of a registration device and a similarity calculation device according to a first embodiment.
FIG. 2 is a functional block diagram illustrating a configuration of the registration device according to the first embodiment.
FIG. 3 is a diagram illustrating an example of a data structure of a media database (DB) according to the first embodiment.
FIG. 4 is a functional block diagram illustrating a configuration of the similarity calculation device according to the first embodiment.
FIG. 5 is a diagram illustrating an example of a data structure of a binary code table according to the first embodiment.
FIG. 6 is a flowchart illustrating a processing procedure of the registration device according to the first embodiment.
FIG. 7 is a flowchart illustrating a processing procedure of the similarity calculation device according to the first embodiment.
FIG. 8 is a functional block diagram illustrating a configuration of the similarity calculation device according to a second embodiment.
FIG. 9 is a flowchart illustrating a processing procedure of the similarity calculation device according to the second embodiment.
FIG. 10 is a diagram illustrating an example of a hardware configuration of a computer that implements functions similar to those of the registration device according to the present embodiments.
FIG. 11 is a diagram illustrating an example of a hardware configuration of a computer that implements functions similar to those of the similarity calculation device according to the present embodiments.

DESCRIPTION OF EMBODIMENTS

Hereinafter, embodiments of a similarity calculation device, a similarity calculation method, and a similarity calculation program according to the present invention will be described in detail with reference to the drawings. Note that the present invention is not limited to the embodiments.

[First Embodiment]

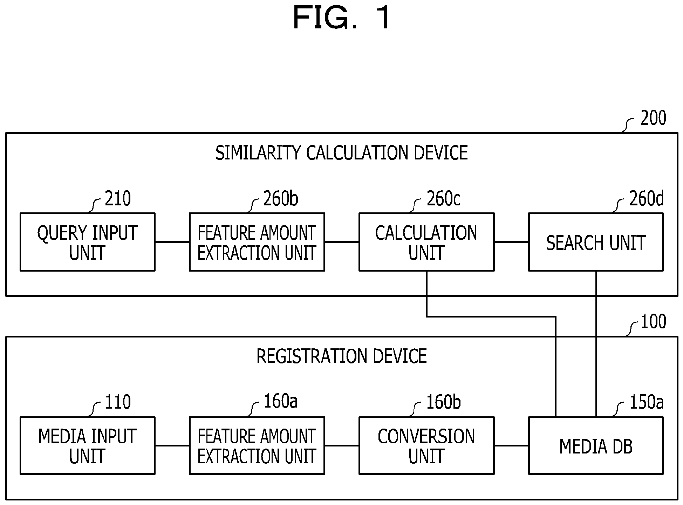

FIG. 1 is a diagram for explaining the processing of the registration device and the similarity calculation device according to the first embodiment. As illustrated in FIG. 1, a registration device 100 includes a media input unit 110, a feature amount extraction unit 160a, a conversion unit 160b, and a media DB 150a. A similarity calculation device 200 includes a query input unit 210, a feature amount extraction unit 260b, a calculation unit 260c, and a search unit 260d.
The registration device 100 is a processing unit that converts media data into binary binary data, associates the media data with the binary data, and registers them in the media DB 150a.
The media input unit 110 is a processing unit that accepts input of a plurality of media data. For example, media data is data corresponding to image data, moving image data, sound (voice) data, and the like. The media input unit 110 outputs a plurality of media data to the feature amount extraction unit 160a.
The feature amount extraction unit 160a is a processing unit that converts the media data into a feature vector having a fixed length number of dimensions by extracting the feature amount from the media data. For example, when the media data is image data or moving image data, the feature amount extraction unit 160a converts the media data into the feature vector by extracting the histograms of oriented gradients (HOG) feature amount and the like. When the media data is sound data, the feature amount extraction unit 160a converts the media data into the feature vector by extracting the i-vector feature amount and the like.
The feature amount extraction unit 160a converts each of a plurality of media data into feature vectors and outputs each of the converted feature vectors to the conversion unit 160b.
The conversion unit 160b is a processing unit that converts the feature vector into a binary code having a predetermined number of dimensions. The conversion unit 160b converts the feature vector into the binary code by performing conversion processing and binarization processing.

The conversion unit 160b converts the feature vector into a conversion vector having the same number of dimensions as the number of dimensions of the binary code by performing conversion processing such as iterative quantization (ITQ) and locality sensitive hashing (LSH). The conversion unit 160b converts the conversion vector into the binary code by performing binarization processing on the conversion vector.

The conversion unit 160b converts each of a plurality of feature vectors into binary codes and registers information regarding each binary code in the media DB 150a.

The media DB 150a is a database that holds information regarding the binary code extracted from media data.

When accepting media data to become a query, the similarity calculation device 200 is a device that calculates each similarity between the query and each of media data registered in the media DB 150a. The similarity calculation device 200 calculates the similarity based on the probability that the binary code obtained by binarizing the feature vector of the query becomes the binary code of the media.

The query input unit 210 is a processing unit that accepts input of media data to become a query. In the following description, the media data to become a query is referred to as "query data". The query input unit 210 outputs the query data to the feature amount extraction unit 260b.

The feature amount extraction unit 260b is a processing unit that converts the query data into the feature vector having a fixed length number of dimensions by extracting the feature amount from the query data. The processing of converting the query data (media data) into the feature vector by the feature amount extraction unit 260b is similar to the processing of the feature amount extraction unit 160a. The feature amount extraction unit 260b outputs the feature vector corresponding to the query data to the calculation unit 260c.

The calculation unit 260c is a processing unit that calculates each similarity between the query data and each of media data in the media DB 150a. The calculation unit 260c calculates the similarity based on the probability that the binary code obtained by binarizing the feature vector of the query data is converted into the binary code corresponding to the media data registered in the media DB 150a. The calculation unit 260c outputs data of the similarity to the search unit 260d.

The search unit 260d is a processing unit that searches the media DB 150a for media data similar to the query data based on the similarity.

As described above, the similarity calculation device 200 according to the first embodiment calculates the similarity based on the probability that the binary code obtained by binarizing the feature vector of the query data becomes the binary code of the media data. This makes it possible to realize a similarity calculation that is more detailed than the Hamming distance.

For example, if the binary code of the query data is "1010", the binary code of one media data is "1101", and the binary code of other media data is "1110", the Hamming distances between the binary code of the query and the binary code of each media data become the same, and the similarities become the same. On the other hand, in the similarity calculation device 200, since the probability that the query data is converted into the binary code "1101" and the probability that the query data is converted into the binary code "1110" are each calculated, it is possible to distinguish the similarities.

Furthermore, since the similarity calculation device 200 calculates the similarity based on the probability that the binary code obtained by binarizing the feature vector of the query data becomes the binary code of the media data, it is possible to suppress the calculation cost compared to a case of performing the similarity calculation of each feature vector.

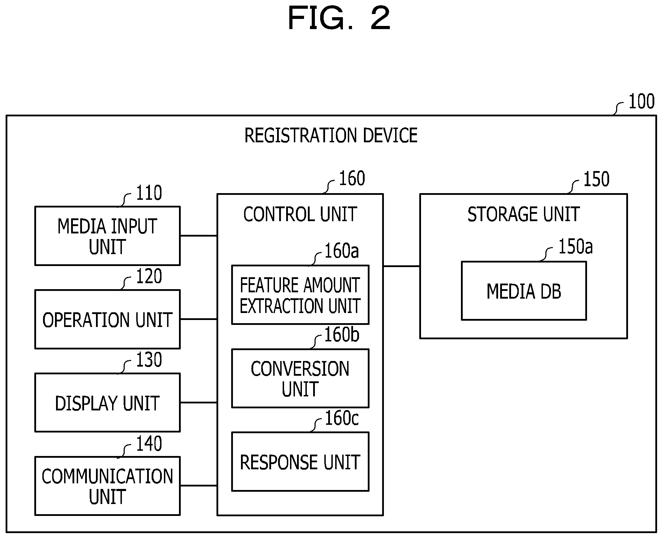

Next, an example of the configuration of the registration device 100 illustrated in FIG. 1 will be described. FIG. 2 is a functional block diagram illustrating a configuration of the registration device according to the first embodiment. As illustrated in FIG. 2, the registration device 100 includes a media input unit 110, an operation unit 120, a display unit 130, a communication unit 140, a storage unit 150, and a control unit 160.

The media input unit 110 is a processing unit that accepts input of a plurality of media data. The media input unit 110 inputs a plurality of media data to the feature amount extraction unit 160a of the control unit 160. For example, the media input unit 110 corresponds to an interface device or the like connected to another external device. Identification information that uniquely identifies the media data may be added to each media data.

The operation unit 120 is an input device for the user to perform various input operations. The operation unit 120 corresponds to a keyboard, a mouse, a touch panel, and the like.

The display unit 130 is a display device that displays various information output from the control unit 160. The display unit 130 corresponds to a liquid crystal display, a touch panel, and the like.

The communication unit 140 is a processing unit that executes data communication with another device via a network. The communication unit 140 corresponds to a communication device. For example, the registration device 100 performs data communication with the similarity calculation device 200 via a network.

The storage unit 150 has the media DB 150a. The storage unit 150 corresponds to a semiconductor memory element such as a random access memory (RAM), a read only memory (ROM), and a flash memory, or a storage device such as a hard disk drive (HDD).

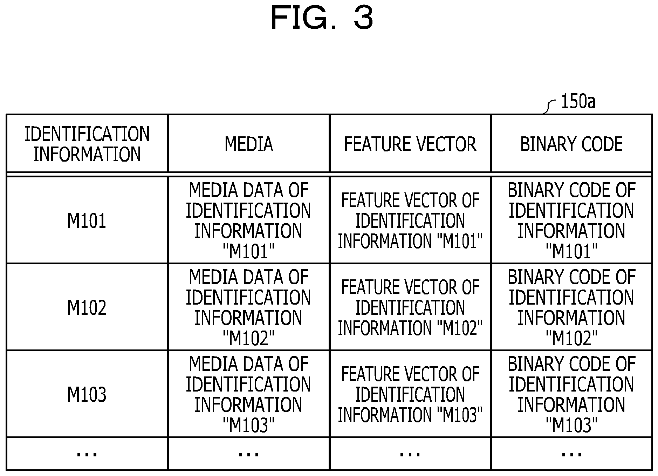

The media DB 150a is a database that holds information regarding the media data. FIG. 3 is a diagram illustrating an example of a data structure of the media DB according to the first embodiment. As illustrated in FIG. 3, the media DB 150a associates the identification information, the media, the feature vector, and the binary code with each other. The identification information is information that uniquely identifies the media data. The media is media data input from the media input unit 110. The feature vector is a feature vector of media data converted by the feature amount extraction unit 160a. The binary code is a binary code of media data (feature vector) converted by the conversion unit 160b.

The control unit 160 includes a feature amount extraction unit 160a, a conversion unit 160b, and a response unit 160c. The control unit 160 can be implemented by a central processing unit (CPU), a micro processing unit (MPU), or the like. Furthermore, the control unit 83 can also be realized by a hard-wired logic such as an application specific integrated circuit (ASIC) or a field programmable gate array (FPGA).

The feature amount extraction unit 160a is a processing unit that converts the media data into a feature vector having a fixed length number of dimensions by extracting the feature amount from the media data. For example, let the number of dimensions of a feature vector X be "Dx". Furthermore, the feature vector X is represented by Equation (1).

[Equation 1]

$$X = \begin{pmatrix} x_1 \\ x_2 \\ \vdots \\ x_{Dx} \end{pmatrix} \quad \cdots (1)$$

The feature amount extraction unit 160a acquires a plurality of media data from the media input unit 110 and stores the plurality of media data in the media DB 150a. The feature amount extraction unit 160a converts each media data into the feature vector and registers it in the media DB 150a. Other processing related to the feature amount extraction unit 160a is similar to the processing of the feature amount extraction unit 160a performed in FIG.1.

The conversion unit 160b is a processing unit that converts the feature vector into the binary code having a predetermined number of dimensions. For example, the conversion unit 160b converts a feature vector X into a binary code B by performing conversion processing and binarization processing. For example, let the number of dimensions of the binary code B be "Db".

An example of the "conversion processing" performed by the conversion unit 160b will be described. When the conversion processing is represented by a function F, a conversion result obtained by converting the feature vector is represented in Equation (2a). Y represented in Equation (2a) is a conversion vector. The number of dimensions of the conversion vector Y is "Db".

$$Y = F(X) \quad \cdots (2a)$$

By the way, the relationship of Equation (2a) will be described more specifically by Equation (2b), for example. The conversion unit 160b generates a matrix A with Db rows and Dx columns based on LSH. The value of each element a of the matrix A is set randomly. The conversion unit 160b calculates the matrix Y (conversion vector Y) by multiplying the matrix A by the matrix X (feature vector X).

[Equation 2]

$$\begin{pmatrix} a_{11} & a_{12} & a_{13} & \cdots & a_{1Dx} \\ & & \cdots & & \\ a_{Db1} & a_{Db2} & a_{Db3} & \cdots & a_{DbDx} \end{pmatrix} \begin{pmatrix} x_1 \\ x_2 \\ \vdots \\ x_{Dx} \end{pmatrix} = \begin{pmatrix} y_1 \\ y_2 \\ \vdots \\ y_{Dx} \end{pmatrix} \quad \cdots (2b)$$

Note that the conversion processing performed by the conversion unit 160b is not limited to LSH, and the feature vector X may be converted into the conversion vector Y by performing a conversion processing such as ITQ. Furthermore, the present invention is not limited to the linear transformation described in Equation (2b), and the feature vector X may be transformed into the conversion vector Y by using a neural network that has finished learning.

Next, the "binarization processing" performed by the conversion unit 160b will be described. The conversion unit 160b converts the conversion vector Y into binary code based on Equation (3). Equation (3) is a logistic function. In Equation (3), $Y_i$ is the i-dimensional value of the conversion vector Y. The conversion unit 160b converts $Y_i$ into "1" when $R_i$ obtained by substituting $Y_i$ into Equation (3) is 0.5 or more. The conversion unit 160b converts $Y_i$ into "0" when $R_i$ obtained by substituting $Y_i$ into Equation (3) is less than 0.5.

$$R_i = 1/(1 + \exp(-Y_i)) \ \ldots \ (3)$$

The conversion unit 160b converts the conversion vector Y into the binary code B by repeatedly executing the processing described above for each dimension of the conversion vector Y. The conversion unit 160b converts each feature vector into binary code by executing each of conversion processing and binarization processing for each feature vector. The conversion unit 160b registers the binary code in the media DB 150a.

The response unit 160c is a processing unit that responds to a request accepted from the similarity calculation device 200. When accepting a request for a binary code of each media data from the similarity calculation device 200, the response unit 160c generates a binary code table in which the binary code is extracted from the media DB 150a and outputs the binary code table to the similarity calculation device 200. When receiving the identification information from the similarity calculation device 200, the response unit 160c acquires the media data corresponding to the identification information from the media DB 150a and outputs the media data to the similarity calculation device 200.

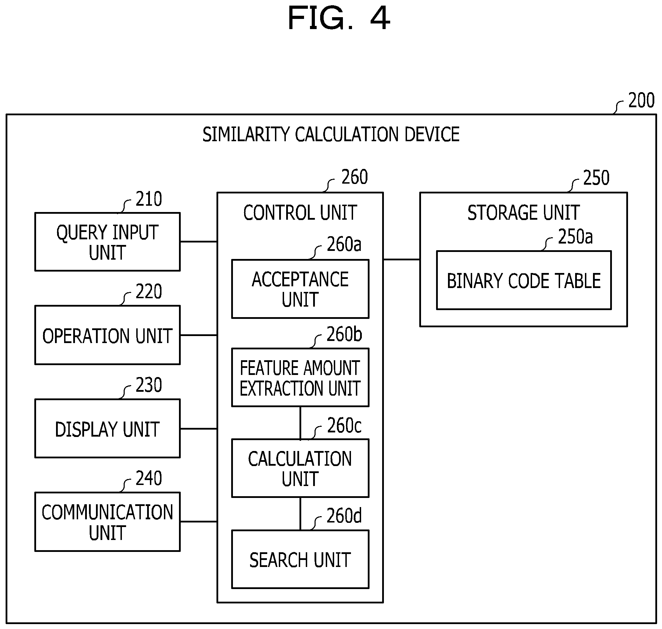

Next, an example of the configuration of the similarity calculation device 200 illustrated in FIG. 1 will be described. FIG. 4 is a functional block diagram illustrating the configuration of the similarity calculation device according to the first embodiment. As illustrated in FIG. 4, the similarity calculation device 200 includes a query input unit 210, an operation unit 220, a display unit 230, a communication unit 240, a storage unit 250, and a control unit 260.

The query input unit 210 is a processing unit that accepts input of the query data. The query input unit 210 outputs the query data to the feature amount extraction unit 260b.

The operation unit 220 is an input device for the user to perform various input operations. The operation unit 220 corresponds to a keyboard, a mouse, a touch panel, and the like.

The display unit 230 is a display device that displays various information output from the control unit 260. The display unit 230 corresponds to a liquid crystal display, a touch panel, and the like.

The communication unit 240 is a processing unit that executes data communication with another device via a network. The communication unit 240 corresponds to a communication device. For example, the similarity calculation device 200 performs data communication with the registration device 100 via a network.

The storage unit 250 has a binary code table 250a. The storage unit 250 corresponds to the semiconductor memory element such as the RAM, the ROM, and the flash memory, or the storage device such as the HDD.

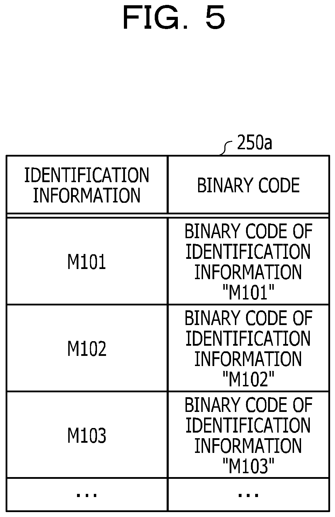

The binary code table 250a is a table that holds a binary code corresponding to each media data. FIG. 5 is a diagram illustrating an example of a data structure of the binary code table according to the first embodiment. As illustrated in FIG. 5, the binary code table 250a associates the identification information with the binary code. The identification information is information that uniquely identifies the media data. The binary code is a binary code generated by the registration device 100.

The control unit 260 includes an acceptance unit 260a, a feature amount extraction unit 260b, a calculation unit 260c, and a search unit 260d. The control unit 260 can be implemented by the CPU, the MPU, or the like. Furthermore, the control unit 260 can also be realized by a hard-wired logic such as the ASIC or the FPGA.

The acceptance unit 260a is a processing unit that requests the binary code to the registration device 100 and accepts the binary code table 250a. The acceptance unit 260a registers the binary code table 250a in the storage unit 250.

The feature amount extraction unit 260b is a processing unit that acquires query data from the query input unit 210 and extracts a feature amount from the query data to convert the query data into the feature vector having the number of dimensions "Dx". The processing in which the feature amount extraction unit 260b converts the query data into the feature vector is similar to the processing in which the feature amount extraction unit 160a converts the media data into the feature vector. The feature amount extraction unit 260b outputs the feature vector to the calculation unit 260c.

The calculation unit 260c is a processing unit that calculates each similarity between the query data and each of media data in the media DB 150a. For example, the calculation unit 260c calculates the similarity using the feature vector of the query data and the binary code table 250a.

For example, it is possible to define the probability that the feature vector X of the query data is converted into the binary code B as P(B|X). P(B|X) is the conditional probability of the feature vector X regarding the binary code B. Assuming that each dimension of the binary code B is independent, it is possible to define P(B|X) by Equation (4) using logarithms.

$$\log(P(B|X)) = B*Y + const \ ... \ (4)$$

In Equation (4), Y is the conversion vector Y of the feature vector X of the query data. The calculation unit 260c converts the feature vector X into the conversion vector based on Equation (2a) in the manner similar to the conversion unit 160b described above. "B*Y" indicates the inner product of the binary code B and the conversion vector. const is a value that does not depend on the binary code B, that is set preliminarily.

The calculation unit 260c calculates the value of Equation (4) based on the conversion vector obtained from the query data and each binary code of the binary code table 250a. By this processing, the calculation unit 260c calculates each similarity between the query data and each of binary data. For example, the calculation unit 260c outputs to the search unit 260d the data of the calculation result in which the identification information of the binary code used when calculating the similarity and the similarity are associated with each other.

The search unit 260d is a processing unit that searches the media DB 150a for media data similar to the query data based on the similarity. For example, the search unit 260d acquires the data of the calculation result from the calculation unit 260c, compares each similarity, specifies the similarity that is maximum, and notifies the registration device 100 of the identification information corresponding to the specified similarity. Note that the search unit 260d may sort the similarities in descending order and notify the registration device 100 of the identification information corresponding to the top N similarities. N is a numerical value that is set preliminarily.

The search unit 260d acquires the media data corresponding to the identification information from the registration device 100 and uses the acquired media data as the search result. The search unit 260d outputs the media data of the search result to the display unit 230 to cause to display it. Furthermore, the search unit 260d may transmit the media data of the search result to another device connected to the network.

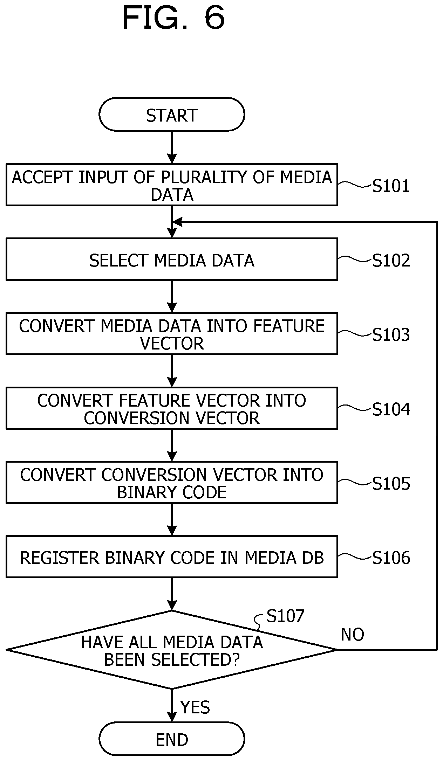

Next, an example of a processing procedure of the registration device 100 according to the first embodiment will be described. FIG. 6 is a flowchart illustrating the processing procedure of the registration device according to the first embodiment. As illustrated in FIG. 6, the media input unit 110 of the registration device 100 accepts input of a plurality of media data (step S101).

The feature amount extraction unit 160a of the registration device 100 selects media data (step S102). The feature amount extraction unit 160a converts the media data into the feature vector (step S103). The conversion unit 160b of the registration device 100 converts the feature vector into the conversion vector (step S104).

The conversion unit 160b converts the conversion vector into the binary code (step S105). The conversion unit 160b registers the binary code in the media DB 150a (step S106).

The registration device 100 determines whether or not all the media data have been selected (step S107). When all the media data have not been selected (step S107, No), the registration device 100 proceeds to step S102. On the other hand, when all the media data have been selected (step S107, Yes), the registration device 100 ends the processing.

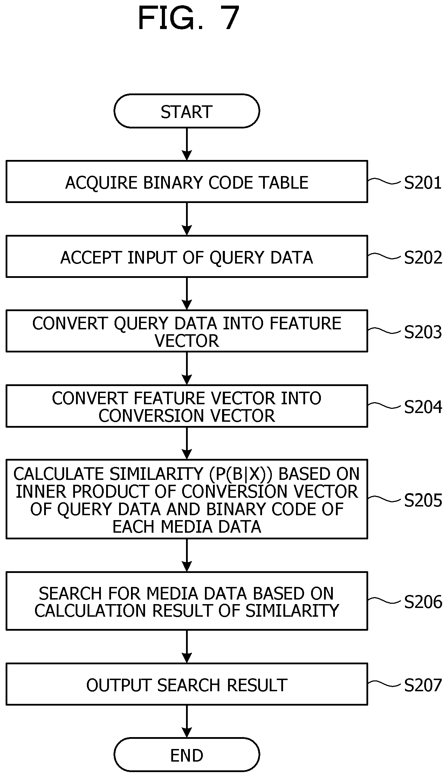

Next, an example of a processing procedure of the similarity calculation device 200 according to the first embodiment will be described. FIG. 7 is a flowchart illustrating the processing procedure of the similarity calculation device according to the first embodiment. As illustrated in FIG. 7, the acceptance unit 260a of the similarity calculation device 200 acquires the binary code table 250a from the registration device 100 (step S201).

The query input unit 210 of the similarity calculation device 200 accepts the input of query data (step S202). The feature amount extraction unit 260b of the similarity calculation device 200 converts the query data into the feature vector (step S203). The calculation unit 260c of the similarity calculation device 200 converts the feature vector into the conversion vector (step S204).

The calculation unit 260c calculates the similarity based on the inner product of the conversion vector of the query data and the binary code of each media data (step S205). The similarity calculated in step S205 corresponds to the probability "P(B|X)".

The search unit 260d of the similarity calculation device 200 searches for media data based on the calculation result of the similarity (step S206). In step S206, the search unit 260d acquires the media data as the search result by notifying the registration device 100 of the identification information of the media data corresponding to the maximum similarity. The search unit 260d outputs the search result to the display unit 230 (step S207).

Next, effects of the similarity calculation device 200 according to the first embodiment will be described. The similarity calculation device 200 calculates the similarity based on the probability P(B|X) that the binary code obtained by binarizing the feature vector of the query data becomes the binary code of the media data. This makes it possible to realize a similarity calculation that is more detailed than the Hamming distance.

For example, if the binary code of the query data is "1010", the binary code of one media data is "1101", and the binary code of other media data is "1110", the Hamming distances between the binary code of the query and the binary code of each media data become the same, and the similarities become the same. On the other hand, in the similarity calculation device 200, since the probability that the query data is converted into the binary code "1101" and the probability that the query data is converted into the binary code "1110" are each calculated, it is possible to rank the similarities.

Since the similarity calculation device 200 calculates the similarity based on the probability that the binary code obtained by binarizing the feature vector of the query data becomes the binary code of the media data, it is possible to suppress the calculation cost compared to a case of performing the similarity calculation of each feature vector.

When calculating the similarity, the similarity calculation device 200 calculates the similarity using the binary code table 250a and does not store each media data and each feature vector in the storage unit 250. Therefore, it is possible to reduce the capacity of the data registered in the storage unit 250.

By the way, the similarity calculation device 200 according to the first embodiment uses the probability $P(B|X)$ as the similarity, but the similarity is not limited to this. The similarity calculation device 200 may use "$\log(P(B|X))$" as the similarity.

[Second Embodiment]

Next, the similarity calculation device according to a second embodiment will be described. The similarity calculation device according to the second embodiment converts the query data into the binary code, compares it with the binary code of each media data, and calculates the Hamming distance. The similarity calculation device narrows down the media data by giving priority to those having a small Hamming distance and calculates the similarity (probability $P(B|X)$) between the narrowed down media data and the query data by performing the processing similar to the similarity calculation device of the first embodiment. By narrowing down using the Hamming distance in this way, it is possible to reduce the calculation target of the similarity (probability $P(B|X)$) and reduce the calculation cost further.

Although not illustrated in the drawings, it is assumed that the similarity calculation device according to the second embodiment is connected to the registration device 100 described with reference to FIGS. 1 and 2.

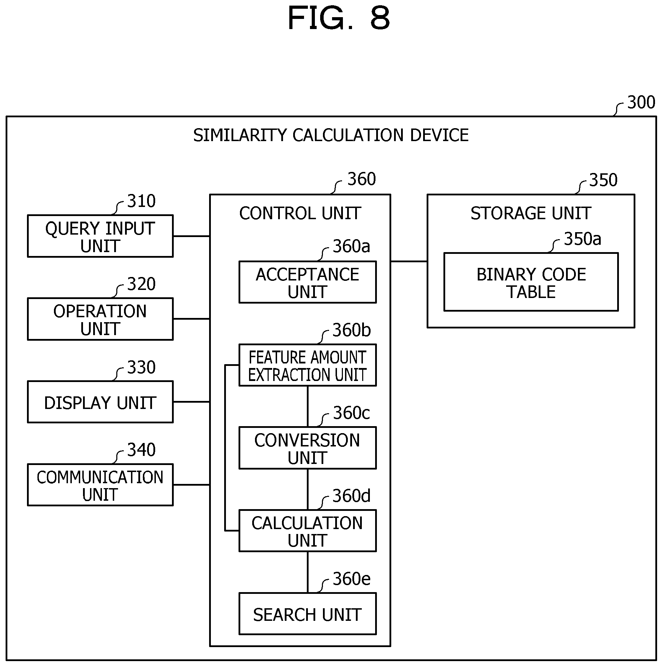

FIG. 8 is a functional block diagram illustrating a configuration of the similarity calculation device according to the second embodiment. As illustrated in FIG. 8, this similarity calculation device 300 includes a query input unit 310, an operation unit 320, a display unit 330, a communication unit 340, a storage unit 350, and a control unit 360.

The query input unit 310 is a processing unit that accepts input of the query data. The query input unit 310 outputs the query data to the feature amount extraction unit 360b.

The operation unit 320 is an input device for the user to perform various input operations. The operation unit 320 corresponds to a keyboard, a mouse, a touch panel, and the like.

The display unit 330 is a display device that displays various information output from the control unit 360. The display unit 330 corresponds to a liquid crystal display, a touch panel, and the like.

The communication unit 340 is a processing unit that executes data communication with another device via a network. The communication unit 340 corresponds to a communication device. For example, the similarity calculation device 300 performs data communication with the registration device 100 via a network.

The storage unit 350 has a binary code table 350a. The storage unit 350 corresponds to the semiconductor memory element such as the RAM, the ROM, and the flash memory, or the storage device such as the HDD.

The binary code table 350a is a table that holds a binary code corresponding to each media data. The data structure of the binary code table 350a is similar to the data structure of the binary code table 250a described with reference to FIG. 5.

The control unit 360 includes an acceptance unit 360a, a feature amount extraction unit 360b, a conversion unit 360c, a calculation unit 360c, and a search unit 360d. The control unit 360 can be implemented by the CPU, the MPU, or the like. Furthermore, the control unit 360 can also be realized by a hard-wired logic such as the ASIC or the FPGA.

The acceptance unit 360a is a processing unit that requests the binary code to the registration device 100 and accepts the binary code table 350a. The acceptance unit 360a registers the binary code table 350a in the storage unit 350.

The feature amount extraction unit 360b is a processing unit that acquires query data from the query input unit 310 and extracts a feature amount from the query data to convert the query data into the feature vector having the number of dimensions "Dx". The processing in which the feature amount extraction unit 360b converts the query data into the feature vector is similar to the processing in which the feature amount extraction unit 160a converts the media data into the feature vector. The feature amount extraction unit 360b outputs the feature vector to the conversion unit 360c and the calculation unit 360d.

The conversion unit 360c is a processing unit that converts the feature vector into the binary code having a predetermined number of dimensions. For example, the conversion unit 360b converts the feature vector X into binary code B by performing conversion processing and binarization processing. For example, let the number of dimensions of the binary code B be "Db". The conversion processing and binarization processing performed by the conversion unit 360c are similar to the conversion processing and binarization processing performed by the conversion unit 160b. The conversion unit 360c outputs the binary code to the calculation unit 360d.

In the following description, the binary code of the binary code table 350a is referred to as "first binary code". The binary code of the query data converted by the conversion unit 360c is referred to as "second binary code".

The calculation unit 360d is a processing unit that calculates each similarity between the query data and each of media data in the media DB 150a. For example, the calculation unit 360d performs the narrowing processing, narrows down the first binary code, and then calculates the similarity using the narrowed down first binary code.

The narrowing processing performed by the calculation unit 360d will be described. The calculation unit 360d calculates the respective Hamming distances between the second binary code and each first binary code. The calculation unit 360d sorts each first binary code in ascending order from the one with the smallest Hamming distance from the second binary code. The calculation unit 360d selects the top M first binary codes from each of the sorted first binary codes. M is a numerical value that is set preliminarily.

The calculation of the similarity performed by the calculation unit 360d will be described. The calculation unit 360d calculates the similarity using the feature vector of the query data and the first binary code selected by the narrowing processing. The calculation unit 360d calculates the similarity based on Equation (4) in the manner similar to the calculation unit 260c. The calculation unit 360d outputs to the search unit 360e the data of the calculation result in which the identification information of the first binary code used when calculating the similarity and the similarity are associated with each other.

The search unit 360e is a processing unit that searches the media DB 150a for media data similar to the query data based on the similarity. For example, the search unit 360e acquires the data of the calculation result from the calculation unit 360d, compares each similarity, specifies the similarity that is maximum, and notifies the registration device 100 of the identification information corresponding to the specified similarity. Note that the search unit 360e may sort the similarities in descending order and notify the registration device 100 of the identification information corresponding to the top N similarities.

The search unit 360e acquires the media data corresponding to the identification information from the registration device 100 and uses the acquired media data as the search result. The search unit 360e outputs the media data of the search result to the display unit 330 to cause to display it. Furthermore, the search unit 360e may transmit the media data of the search result to another device connected to the network.

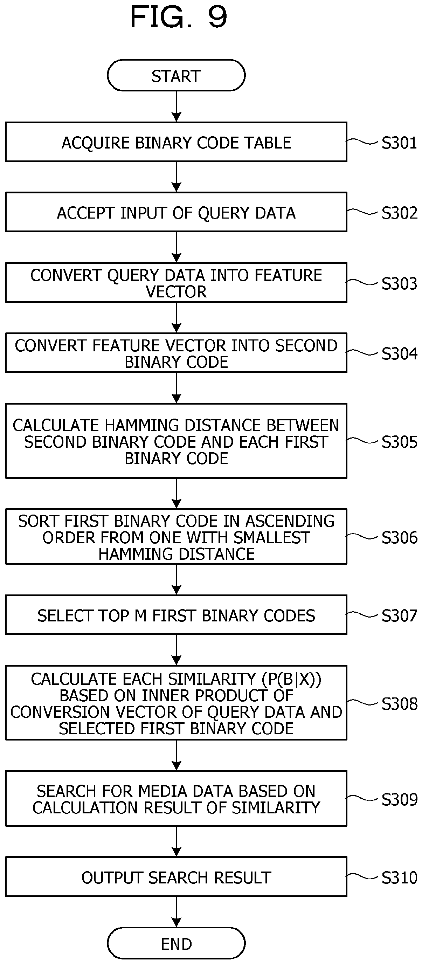

Next, an example of a processing procedure of the similarity calculation device 300 according to the second embodiment will be described. FIG. 9 is a flowchart illustrating a processing procedure of the similarity calculation device according to the second embodiment. As illustrated in FIG. 9, the acceptance unit 360a of the similarity calculation device 300 acquires the binary code table 350a from the registration device 100 (step S301).

The query input unit 310 of the similarity calculation device 300 accepts the input of query data (step S302). The feature amount extraction unit 360b of the similarity calculation device 300 converts the query data into the feature vector (step S303). The conversion unit 360c of the similarity calculation device 300 converts the feature vector into the binary code (step S304).

The calculation unit 360d calculates the Hamming distance between the conversion vector of the query data and the first binary code of each media data (step S305). The calculation unit 360d sorts the first binary code in ascending order from the one with the smallest Hamming distance (step S306). The calculation unit 360d selects the top M first binary codes (step S307).

The calculation unit 360c calculates the similarity based on the inner product of the conversion vector of the query data and the selected first binary code (step S308). The similarity calculated in step S308 corresponds to the probability "P(B|X)".

The search unit 360e of the similarity calculation device 300 searches for media data based on the calculation result of the similarity (step S309). In step S309, the search unit 360e acquires the media data as the search result by notifying the registration device 100 of the identification information of the media data corresponding to the maximum similarity. The search unit 360e outputs the search result to the display unit 330 (step S310).

Next, effects of the similarity calculation device 300 according to the second embodiment will be described. The similarity calculation device 300 converts the query data into the binary code, compares it with the binary code of each media data, and calculates the Hamming distance. The similarity calculation device 300 narrows down the media data by giving priority to those having a small Hamming distance and calculates the similarity (probability P(B|X)) between the binary code of the narrowed down media data and the binary code of the query data. By narrowing down using the Hamming distance in this way, it is possible to reduce the calculation target of the similarity (probability P(B|X)) and reduce the calculation cost further.

By the way, in the first and second embodiments described above, image data, moving image data, and sound (voice) data have been described as examples of media data, but the description is not limited to this, and it is also possible to use biometric information as media data. Biometric information includes human fingerprints, irises, facial images, vital signs, and the like.

The registration device 100 illustrated in FIGS. 1 and 2 generates the feature vector by extracting the feature amount from the biometric data and registers the binary code of the biometric data in the media DB 150a. The similarity calculation devices 200 and 300 illustrated in FIGS. 1, 4, and 8 generate the feature vector by extracting the feature amount from the biometric information of the user and calculate the similarity.

Furthermore, in the first and second embodiments, the case where the registration device 100 and the similarity calculation devices 200 and 300 are separate devices has been described as an example, but the present invention is not limited to this. The registration device 100 and the similarity calculation device 200 may be included in one device. The registration device 100 and the similarity calculation device 300 may be included in one device.

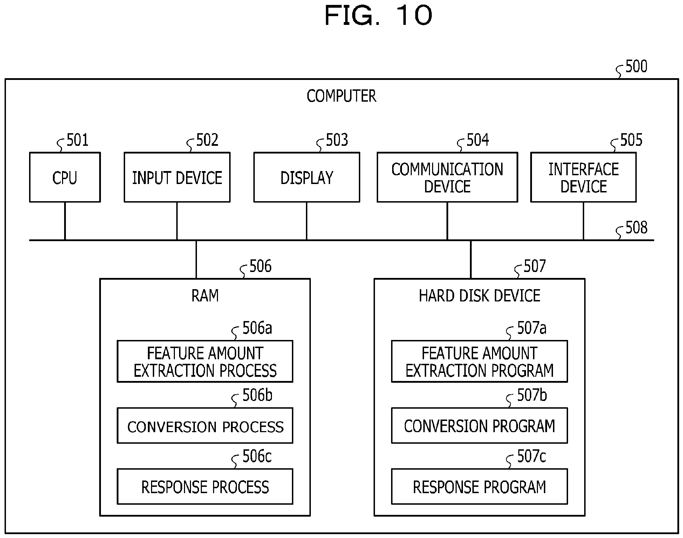

Next, an example of a hardware configuration of a computer that implements functions similar to those of the registration device 100 and the similarity calculation devices 200 and 300 described in the embodiments will be described. FIG. 10 is a diagram illustrating an example of a hardware configuration of a computer that implements functions similar to those of the registration device according to the present embodiments.

As illustrated in FIG. 10, a computer 500 includes a CPU 501 that executes various calculation processing, an input device 502 that accepts data input from a user, and a display 503. Furthermore, the computer 500 includes a reading device 504 that reads a program and the like from a storage medium, and an interface device 505 that exchanges data with an external device and the like via a wired or wireless network. The computer 500 includes a RAM 506 that temporarily stores various information, and a hard disk device 507. Then, each of the devices 501 to 507 is connected to a bus 508.

The hard disk device 507 has a feature amount extraction program 507a, a conversion program 507b, and a response program 507c. The CPU 501 reads the feature amount extraction program 507a, the conversion program 507b, and the response program 507c and expands them in the RAM 506.

The feature amount extraction program 507a functions as a feature amount extraction process 506a. The conversion program 507b functions as a conversion process 506b. The response program 507c functions as a response process 506c.

The processing of the feature amount extraction process 506a corresponds to the processing of the feature amount extraction unit 160a. The processing of the conversion process 506b corresponds to the processing of the conversion unit 160b. The processing of the response process 506c corresponds to the processing of the response unit 160c.

Note that each of the programs 507a to 507c may not need to be stored in the hard disk device 507 beforehand. For example, each of the programs may be stored in a "portable physical medium" such as a flexible disk (FD), a compact disc (CD)-ROM, a digital versatile disk (DVD), a magneto-optical disk, or an integrated circuit (IC) card to be inserted in the computer 500. Then, the computer 500 may read and execute each of the programs 507a to 507e.

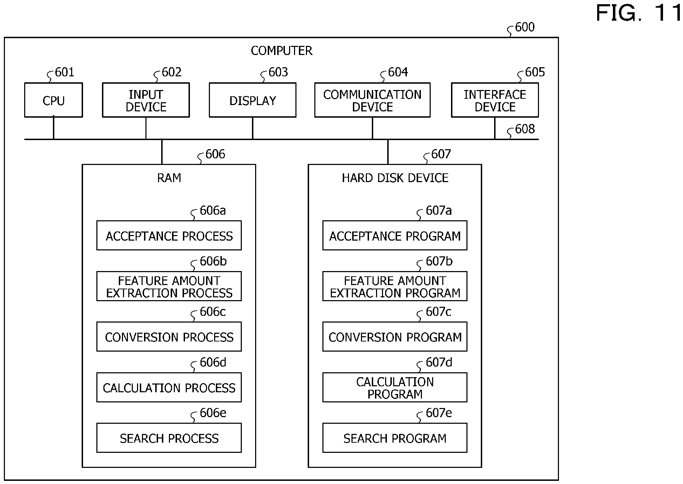

FIG. 11 is a diagram illustrating an example of a hardware configuration of a computer that implements functions similar to those of the similarity calculation device according to the present embodiments.

As illustrated in FIG. 11, a computer 600 includes a CPU 601 that executes various calculation processing, an input device 602 that accepts data input from a user, and a display 603. Furthermore, the computer 600 includes a reading device 604 that reads a program and the like from a storage medium, and an interface device 605 that exchanges data with an external device and the like via a wired or wireless network. The computer 600 includes a RAM 606 that temporarily stores various information, and a hard disk device 607. Then, each of the devices 601 to 607 is connected to a bus 608.

The hard disk device 607 includes a reception program 607a, a feature amount extraction program 607b, a conversion program 607c, a calculation program 607d, and a search program 607e. The CPU 601 reads the reception program 607a, the feature amount extraction program 607b, the conversion program 607c, the calculation program 607d, and the search program 607e and expands them in the RAM 606.

The reception program 607a functions as a reception process 606a. The feature amount extraction program 607b functions as a feature amount extraction process 606b. The conversion program 607c functions as a conversion process 606c. The calculation program 607d functions as a calculation process 606d. The search program 607e functions as a search process 606e.

The processing of the reception process 606a corresponds to the processing of the reception units 260a and 360a. The processing of the feature amount extraction process 606b corresponds to the processing of the feature amount extraction units 260b and 360b. The processing of the conversion process 606c corresponds to the processing of the conversion unit 360c. The processing of the calculation process 606d corresponds to the processing of the calculation units 260c and 360d. The processing of the search process 606e corresponds to the processing of the search units 260d and 360e.

Note that each of the programs 607a to 607e may not need to be stored in the hard disk device 607 beforehand. For example, each of the programs may be stored in a "portable physical medium" such as a flexible disk (FD), a compact disc (CD)-ROM, a digital versatile disk (DVD), a magneto-optical disk, or an integrated circuit (IC) card to be inserted in the computer 600. Then, the computer 600 may read and execute each of the programs 607a to 607e.

REFERENCE SIGNS LIST

| | |
|---|---|
| 100 | Registration device |
| 110 | Media input unit |
| 120, 220, 320 | Operation unit |
| 130, 230, 330 | Display unit |
| 140, 240, 340 | Communication unit |
| 150, 250, 350 | Storage unit |
| 150a | Media DB |
| 160, 260, 360 | Control unit |
| 160a, 260b, 360b | Feature amount extraction unit |
| 160b, 360c | Conversion unit |
| 160c | Response unit |

| | |
|---|---|
| 200, 300 | Similarity calculation device |
| 210, 310 | Query input unit |
| 250a, 350a | Binary code table |
| 260a, 360a | Acceptance unit |
| 260c, 360d | Calculation unit |
| 260d, 350e | Search unit |

**Claims**

1. A similarity calculation device, comprising:

   a storage unit configured to store each first code binarized corresponding to a plurality of first media data; and
   a calculation unit configured to calculate, based on a probability that a second code obtained by binarizing a feature vector corresponding to second media data is converted into the first code, each similarity between the second media data and each of the first media data.

2. The similarity calculation device according to claim 1, further comprising
   a search unit configured to search for first media data corresponding to the second media data based on the similarity between the second media data and each of the first media data calculated by the calculation unit.

3. The similarity calculation device according to claim 1, wherein
   the calculation unit converts the feature vector corresponding to the second media data into a conversion vector having a same number of dimensions as the second code and calculates the similarity based on an inner product of the conversion vector and the first code.

4. The similarity calculation device according to claim 1, further comprising

   a conversion unit configured to convert the second media data into the second code, wherein
   the calculation unit selects the first code used for calculating the similarity based on a distance between the second code and each first code.

5. The similarity calculation device according to any one of claims 1 to 4, wherein
   the first media data and the second media data include biometric data, and the calculation unit calculates each similarity between the second media data and each of the first media data based on a probability that a second code obtained by binarizing a feature vector corresponding to the biometric data of the second media data is converted into the first code.

6. A similarity calculation method executed by a computer, the similarity calculation method comprising processing of:

   referring to a storage unit configured to store each first code binarized corresponding to a plurality of first media data; and

calculating, based on a probability that a second code obtained by binarizing a feature vector corresponding to second media data is converted into the first code, each similarity between the second media data and each of the first media data.

7. The similarity calculation method according to claim 6, further comprising processing of
searching for first media data corresponding to the second media data based on the similarity between the second media data and each of the first media data.

8. The similarity calculation method according to claim 6, wherein
in the processing of calculating, the feature vector corresponding to the second media data is converted into a conversion vector having a same number of dimensions as the second code, and the similarity is calculated based on an inner product of the conversion vector and the first code.

9. The similarity calculation method according to claim 6, further comprising processing of:

converting the second media data into the second code; and
selecting the first code used for calculating the similarity based on a distance between the second code and each first code.

10. The similarity calculation method according to any one of claims 6 to 9, wherein
the first media data and the second media data include biometric data, and in the processing of calculating, each similarity between the second media data and each of the first media data is calculated based on a probability that a second code obtained by binarizing a feature vector corresponding to the biometric data of the second media data is converted into the first code.

11. A similarity calculation program for causing a computer to execute processing of:

referring to a storage unit configured to store each first code binarized corresponding to a plurality of first media data; and
calculating, based on a probability that a second code obtained by binarizing a feature vector corresponding to second media data is converted into the first code, each similarity between the second media data and each of the first media data.

12. The similarity calculation program according to claim 11, further causing the computer to execute processing of
searching for first media data corresponding to the second media data based on the similarity between the second media data and each of the first media data.

13. The similarity calculation program according to claim 11, wherein
in the processing of calculating, the feature vector corresponding to the second media data is converted into a conversion vector having a same number of dimensions as the second code, and the similarity is calculated based on an inner product of the conversion vector and the first code.

14. The similarity calculation program according to claim 11, further causing the computer to execute processing of:

converting the second media data into the second code; and
selecting the first code used for calculating the similarity based on a distance between the second code and each first code.

15. The similarity calculation program according to any one of claims 11 to 14, wherein
the first media data and the second media data include biometric data, and in the processing of calculating, each similarity between the second media data and each of the first media data is calculated based on a probability that a second code obtained by binarizing a feature vector corresponding to the biometric data of the second media data is converted into the first code.

# FIG. 1

SIMILARITY CALCULATION DEVICE 200

| QUERY INPUT UNIT 210 | FEATURE AMOUNT EXTRACTION UNIT 260b | CALCULATION UNIT 260c | SEARCH UNIT 260d |

REGISTRATION DEVICE 100

| MEDIA INPUT UNIT 110 | FEATURE AMOUNT EXTRACTION UNIT 160a | CONVERSION UNIT 160b | MEDIA DB 150a |

# FIG. 2

REGISTRATION DEVICE — 100

MEDIA INPUT UNIT — 110

OPERATION UNIT — 120

DISPLAY UNIT — 130

COMMUNICATION UNIT — 140

CONTROL UNIT — 160

FEATURE AMOUNT EXTRACTION UNIT — 160a

CONVERSION UNIT — 160b

RESPONSE UNIT — 160c

STORAGE UNIT — 150

MEDIA DB — 150a

# FIG. 3

150a

| IDENTIFICATION INFORMATION | MEDIA | FEATURE VECTOR | BINARY CODE |
|---|---|---|---|
| M101 | MEDIA DATA OF IDENTIFICATION INFORMATION "M101" | FEATURE VECTOR OF IDENTIFICATION INFORMATION "M101" | BINARY CODE OF IDENTIFICATION INFORMATION "M101" |
| M102 | MEDIA DATA OF IDENTIFICATION INFORMATION "M102" | FEATURE VECTOR OF IDENTIFICATION INFORMATION "M102" | BINARY CODE OF IDENTIFICATION INFORMATION "M102" |
| M103 | MEDIA DATA OF IDENTIFICATION INFORMATION "M103" | FEATURE VECTOR OF IDENTIFICATION INFORMATION "M103" | BINARY CODE OF IDENTIFICATION INFORMATION "M103" |
| ... | ... | ... | ... |

# FIG. 4

SIMILARITY CALCULATION DEVICE — 200

QUERY INPUT UNIT — 210

OPERATION UNIT — 220

DISPLAY UNIT — 230

COMMUNICATION UNIT — 240

CONTROL UNIT — 260

ACCEPTANCE UNIT — 260a

FEATURE AMOUNT EXTRACTION UNIT — 260b

CALCULATION UNIT — 260c

SEARCH UNIT — 260d

STORAGE UNIT — 250

BINARY CODE TABLE — 250a

# FIG. 5

250a

| IDENTIFICATION INFORMATION | BINARY CODE |
|---|---|
| M101 | BINARY CODE OF IDENTIFICATION INFORMATION "M101" |
| M102 | BINARY CODE OF IDENTIFICATION INFORMATION "M102" |
| M103 | BINARY CODE OF IDENTIFICATION INFORMATION "M103" |
| ... | ... |

EP 3 882 781 A1

# FIG. 6

```
        ┌─────────────┐
        │    START    │
        └─────────────┘
               │
               ▼
┌───────────────────────────────┐
│ ACCEPT INPUT OF PLURALITY OF   │──S101
│          MEDIA DATA            │
└───────────────────────────────┘
               │
               ▼
┌───────────────────────────────┐
│       SELECT MEDIA DATA        │──S102
└───────────────────────────────┘
               │
               ▼
┌───────────────────────────────┐
│ CONVERT MEDIA DATA INTO        │──S103
│        FEATURE VECTOR          │
└───────────────────────────────┘
               │
               ▼
┌───────────────────────────────┐
│ CONVERT FEATURE VECTOR INTO    │──S104
│       CONVERSION VECTOR        │
└───────────────────────────────┘
               │
               ▼
┌───────────────────────────────┐
│ CONVERT CONVERSION VECTOR INTO │──S105
│         BINARY CODE            │
└───────────────────────────────┘
               │
               ▼
┌───────────────────────────────┐
│ REGISTER BINARY CODE IN MEDIA DB│──S106
└───────────────────────────────┘
               │
               ▼            S107
         ◇─────────────◇
         │ HAVE ALL MEDIA DATA │  NO
         │  BEEN SELECTED?     │────
         ◇─────────────◇
               │ YES
               ▼
        ┌─────────────┐
        │     END     │
        └─────────────┘
```

18

# FIG. 7

```
        ┌─────────────┐
        │    START    │
        └─────────────┘
               │
               ▼
┌──────────────────────────────────┐
│   ACQUIRE BINARY CODE TABLE       │── S201
└──────────────────────────────────┘
               │
               ▼
┌──────────────────────────────────┐
│   ACCEPT INPUT OF QUERY DATA      │── S202
└──────────────────────────────────┘
               │
               ▼
┌──────────────────────────────────┐
│  CONVERT QUERY DATA INTO FEATURE  │── S203
│            VECTOR                  │
└──────────────────────────────────┘
               │
               ▼
┌──────────────────────────────────┐
│    CONVERT FEATURE VECTOR INTO    │── S204
│        CONVERSION VECTOR          │
└──────────────────────────────────┘
               │
               ▼
┌──────────────────────────────────┐
│ CALCULATE SIMILARITY (P(B|X)) BASED ON │── S205
│ INNER PRODUCT OF CONVERSION VECTOR │
│  OF QUERY DATA AND BINARY CODE OF  │
│          EACH MEDIA DATA           │
└──────────────────────────────────┘
               │
               ▼
┌──────────────────────────────────┐
│    SEARCH FOR MEDIA DATA BASED ON  │── S206
│  CALCULATION RESULT OF SIMILARITY  │
└──────────────────────────────────┘
               │
               ▼
┌──────────────────────────────────┐
│       OUTPUT SEARCH RESULT         │── S207
└──────────────────────────────────┘
               │
               ▼
        ┌─────────────┐
        │     END     │
        └─────────────┘
```

# FIG. 8

300

## SIMILARITY CALCULATION DEVICE

360

### CONTROL UNIT

350

### STORAGE UNIT

310

QUERY INPUT UNIT

360a

ACCEPTANCE UNIT

350a

BINARY CODE TABLE

320

OPERATION UNIT

360b

FEATURE AMOUNT EXTRACTION UNIT

330

DISPLAY UNIT

360c

CONVERSION UNIT

340

COMMUNICATION UNIT

360d

CALCULATION UNIT

360e

SEARCH UNIT

# FIG. 9

START

ACQUIRE BINARY CODE TABLE — S301

ACCEPT INPUT OF QUERY DATA — S302

CONVERT QUERY DATA INTO FEATURE VECTOR — S303

CONVERT FEATURE VECTOR INTO SECOND BINARY CODE — S304

CALCULATE HAMMING DISTANCE BETWEEN SECOND BINARY CODE AND EACH FIRST BINARY CODE — S305

SORT FIRST BINARY CODE IN ASCENDING ORDER FROM ONE WITH SMALLEST HAMMING DISTANCE — S306

SELECT TOP M FIRST BINARY CODES — S307

CALCULATE EACH SIMILARITY $(P(B|X))$ BASED ON INNER PRODUCT OF CONVERSION VECTOR OF QUERY DATA AND SELECTED FIRST BINARY CODE — S308

SEARCH FOR MEDIA DATA BASED ON CALCULATION RESULT OF SIMILARITY — S309

OUTPUT SEARCH RESULT — S310

END

# FIG. 10

```
                                                                      ⌇500
┌─────────────────────────────────────────────────────────────────────────┐
│                            COMPUTER                                       │
│                                                                           │
│   ⌇501           ⌇502          ⌇503           ⌇504           ⌇505         │
│ ┌────────┐ ┌──────────────┐ ┌──────────┐ ┌──────────────┐ ┌───────────┐  │
│ │  CPU   │ │ INPUT DEVICE │ │ DISPLAY  │ │COMMUNICATION │ │ INTERFACE │  │
│ │        │ │              │ │          │ │   DEVICE     │ │  DEVICE   │  │
│ └────────┘ └──────────────┘ └──────────┘ └──────────────┘ └───────────┘  │
│                                                                   ⌇508    │
│                                                                           │
│                ⌇506                            ⌇507                       │
│   ┌──────────────────────────┐   ┌──────────────────────────────┐        │
│   │          RAM             │   │     HARD DISK DEVICE          │        │
│   │                 ⌇506a    │   │                     ⌇507a     │        │
│   │  ┌────────────────────┐  │   │  ┌────────────────────────┐   │        │
│   │  │  FEATURE AMOUNT    │  │   │  │   FEATURE AMOUNT       │   │        │
│   │  │ EXTRACTION PROCESS │  │   │  │  EXTRACTION PROGRAM    │   │        │
│   │  └────────────────────┘  │   │  └────────────────────────┘   │        │
│   │                 ⌇506b    │   │                     ⌇507b     │        │
│   │  ┌────────────────────┐  │   │  ┌────────────────────────┐   │        │
│   │  │ CONVERSION PROCESS │  │   │  │  CONVERSION PROGRAM    │   │        │
│   │  └────────────────────┘  │   │  └────────────────────────┘   │        │
│   │                 ⌇506c    │   │                     ⌇507c     │        │
│   │  ┌────────────────────┐  │   │  ┌────────────────────────┐   │        │
│   │  │  RESPONSE PROCESS  │  │   │  │   RESPONSE PROGRAM     │   │        │
│   │  └────────────────────┘  │   │  └────────────────────────┘   │        │
│   └──────────────────────────┘   └──────────────────────────────┘        │
│                                                                           │
└─────────────────────────────────────────────────────────────────────────┘
```

FIG. 11

COMPUTER — 600

| 601 | 602 | 603 | 604 | 605 |
|---|---|---|---|---|
| CPU | INPUT DEVICE | DISPLAY | COMMUNICATION DEVICE | INTERFACE DEVICE |

— 608

**RAM — 606**

ACCEPTANCE PROCESS — 606a

FEATURE AMOUNT EXTRACTION PROCESS — 606b

CONVERSION PROCESS — 606c

CALCULATION PROCESS — 606d

SEARCH PROCESS — 606e

**HARD DISK DEVICE — 607**

ACCEPTANCE PROGRAM — 607a

FEATURE AMOUNT EXTRACTION PROGRAM — 607b

CONVERSION PROGRAM — 607c

CALCULATION PROGRAM — 607d

SEARCH PROGRAM — 607e

## INTERNATIONAL SEARCH REPORT

| International application No. |
| --- |
| PCT/JP2018/042484 |

| A. CLASSIFICATION OF SUBJECT MATTER |
| --- |
| Int. Cl. G06F17/30(2006.01)i |

According to International Patent Classification (IPC) or to both national classification and IPC

| B. FIELDS SEARCHED |
| --- |
| Minimum documentation searched (classification system followed by classification symbols) |
| Int. Cl. G06F17/30 |

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| X | JP 2018-022390 A (NIPPON TELEGRAPH AND TELEPHONE CORP.) 08 February 2018, paragraphs [0021], | 1-3, 6-8, 11-13 |
| Y | [0058], [0059], [0061]-[0091] (Family: none) | 4-5, 9-10, 14-15 |
| Y | WO 2014/118980 A1 (FUJITSU LTD.) 07 August 2014, paragraphs [0070], [0071] & US 2016/0034821 A1, paragraphs [0081], [0082] & EP 2953064 A1 | 4-5, 9-10, 14-15 |

☐ Further documents are listed in the continuation of Box C.    ☐ See patent family annex.

| | |
| --- | --- |
| *  Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
| --- | --- |
| 26.12.2018 | 15.01.2019 |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017054438 A
- JP 2018055618 A
- JP 2013246739 A
- WO 2009151002 A
- US 20110093419 A

**Non-patent literature cited in the description**

- **Y. GONG ; S LAZEBNIK.** Iterative Quantization: A Procrustean Approach to Leaning Binary Codes. *Proc. CVPR,* 2011